# EUROPÄISCHE PATENTSCHRIFT

(11) **EP 3 377 236 B1**
(45) Veröffentlichungstag und Bekanntmachung des Hinweises auf die Patenterteilung: **28.12.2022**
(21) Anmeldenummer: 16800899.3
(22) Anmeldetag: 10.11.2016
(51) Int. Cl.: B22F 12/41, B22F 12/45, B29C 64/153, B29C 64/277, B29C 64/364, B08B 5/04, B08B 15/04

(54) **VORRICHTUNG ZUR GENERATIVEN HERSTELLUNG EINES DREIDIMENSIONALEN OBJEKTS**
DEVICE FOR THE GENERATIVE PRODUCTION OF A THREE-DIMENSIONAL OBJECT
SYSTÈME DE PRODUCTION ADDITIVE D'AU MOINS UN OBJET TRIDIMENSIONNEL

(30) Priorität: 16.11.2015 DE 102015119747
(43) Veröffentlichungstag der Anmeldung: 26.09.2018
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); ZEULNER, Fabian, 96215 Lichtenfels (DE)
(74) Vertreter: Hafner & Kohl PartmbB
(86) Internationale Anmeldenummer: PCT/EP2016/077230
(87) Internationale Veröffentlichungsnummer: WO 2017/084957

(56) Entgegenhaltungen:
- WO-A1-2014/199149
- WO-A1-2014/199150
- DE-A1-102006 052 292

## Beschreibung

Die Erfindung betrifft eine Vorrichtung zur generativen Herstellung eines dreidimensionalen Objekts durch sukzessive schichtweise selektive Verfestigung von Baumaterialschichten aus verfestigbarem Baumaterial vermittels wenigstens eines Energiestrahls, umfassend wenigstens eine Einrichtung zur Erzeugung wenigstens eines Energiestrahls zur schichtweisen selektiven Verfestigung einzelner Baumaterialschichten aus verfestigbarem Baumaterial, wobei die Einrichtung zur Erzeugung eines direkt auf eine Bauebene gerichteten Energiestrahls eingerichtet ist.

Derartige Vorrichtungen sind zur additiven bzw. generativen Herstellung dreidimensionaler Objekte an und für sich bekannt. Vermittels entsprechenden Vorrichtungen werden herzustellende dreidimensionale Objekte durch sukzessive schichtweise selektive Verfestigung von in einer Bauebene aufgebrachten Baumaterialschichten aus verfestigbarem Baumaterial in jeweiligen Querschnittsbereichen der jeweils herzustellenden Objekte entsprechenden Bereichen vermittels eines Energiestrahls, additiv bzw. generativ aufgebaut.

Eine solche Vorrichtung ist z.B. aus WO 2014/199150 A1 bekannt.

Im Rahmen entsprechender generativer Bauprozesse können sich nicht verfestigte Baumaterialpartikel ("Schweiß- oder Sinterspritzer") aus der Bauebene lösen bzw. Prozessgase, insbesondere Rauch- oder Schmauchgase ("Schweiß- oder Sintergase"), entstehen. Um den generativen Bauprozess bzw. das herzustellende dreidimensionale Objekt nicht zu beeinträchtigen, können derartige Baumaterialpartikel bzw. Prozessgase über eine Absaugeinrichtung abgesaugt werden.

Es besteht ein Weiterentwicklungsbedarf entsprechender Absaugeinrichtungen im Hinblick auf eine gezielte bzw. lokale Absaugmöglichkeit abzusaugender Baumaterialpartikel bzw. abzusaugender Prozessgase.

Der Erfindung liegt die Aufgabe zugrunde, eine, insbesondere im Hinblick auf eine gezielte bzw. lokale Absaugmöglichkeit abzusaugender Baumaterialpartikel bzw. abzusaugender Prozessgase, verbesserte Vorrichtung zur generativen Herstellung eines dreidimensionalen Objekts anzugeben.

Die Aufgabe wird durch eine Vorrichtung gemäß Anspruch 1 gelöst. Die hierzu abhängigen Ansprüche betreffen besondere Ausführungsformen der Vorrichtung. Die Aufgabe wird ferner durch eine Absaugeinrichtung gemäß Anspruch 16 und durch ein Verfahren gemäß Anspruch 17 gelöst.

Die hierin beschriebene Vorrichtung dient im Allgemeinen der additiven bzw. generativen Herstellung wenigstens eines dreidimensionalen Objekts, d. h. beispielsweise eines technischen Bauteils bzw. einer technischen Bauteilgruppe, durch sukzessives schichtweises selektives Verfestigen einzelner Baumaterialschichten aus einem verfestigbaren Baumaterial vermittels wenigstens eines von wenigstens einer Einrichtung erzeugten Energiestrahls. Bei der Vorrichtung kann es sich um eine Vorrichtung zur Durchführung selektiver Laserschmelzverfahren oder selektiver Lasersinterverfahren handeln.

Die sukzessive schichtweise selektive Verfestigung einer zu verfestigenden Baumaterialschicht erfolgt auf Grundlage von objektbezogenen Baudaten. Entsprechende Baudaten beschreiben im Allgemeinen die geometrische bzw. geometrisch-konstruktive Gestalt des jeweils generativ herzustellenden dreidimensionalen Objekts (im Weiteren abgekürzt als "Objekt" bezeichnet). Entsprechende Baudaten können beispielsweise CAD-Daten des herzustellenden Objekts sein bzw. solche beinhalten.

Die Vorrichtung umfasst die zur Durchführung generativer Bauprozesse typischerweise erforderlichen Funktionskomponenten, d. h. insbesondere eine kurz als "Einrichtung" bezeichnete Energiestrahlerzeugungseinrichtung zur Erzeugung eines Energiestrahls zur sukzessiven schichtweisen selektiven Verfestigung einzelner Baumaterialschichten aus einem Baumaterial, d. h. insbesondere einem partikulären bzw. pulverförmigen Metall-, Kunststoff- und/oder Keramikmaterial, und eine Beschichtereinrichtung zur Ausbildung zu verfestigender Baumaterialschichten in einer Bauebene. Bei einer Bauebene kann es sich um eine Oberfläche eines, typischerweise (in vertikaler Richtung) bewegbar gelagerten, Trägerelements einer Trägereinrichtung oder um eine bereits verfestigte Baumaterialschicht handeln. Im Allgemeinen ist in einer Bauebene wenigstens eine selektiv zu verfestigende bzw. selektiv verfestigte Baumaterialschicht ausgebildet.

Die Einrichtung kann wenigstens ein, d. h. typischerweise mehrere, direkt über der Bauebene anordenbare(s) bzw. angeordnete(s) Laserdiodenelement(e), welche(s) zur Erzeugung eines direkt auf die Bauebene gerichteten Laserstrahls eingerichtet ist bzw. sind, umfassen. Das oder die Laserdiodenelemente sind hier typischerweise innerhalb einer der Vorrichtung zugehörigen Bau- oder Prozesskammer, in welcher generative Bauvorgänge durchgeführt werden, angeordnet.

Alternativ oder ergänzend, kann die Einrichtung wenigstens ein, d. h. typischerweise mehrere, mit wenigstens einem Laserdiodenelement (optisch) gekoppeltes, direkt über der Bauebene anordenbare(s) bzw. angeordnete(s) optisches Element, welche(s) zur Ablenkung eines von dem Laserdiodenelement erzeugten Laserstrahls direkt auf die Bauebene eingerichtet ist, umfassen. Das oder die Laserdiodenelemente sind hier typischerweise außerhalb einer der Vorrichtung zugehörigen Bau- oder Prozesskammer, in welcher generative Bauvorgänge durchgeführt werden, angeordnet. Ein optisches Element kann als eine ein oder mehrere optische Linsenelemente umfassende Fokussieroptik zur Fokussierung eines Laserstrahls auf die Bauebene ausgebildet sein oder wenigstens eine solche umfassen. Die (optische) Kopplung zwischen einem optischen Element und einem Laserdiodenelement erfolgt über einen Lichtleitelement, z. B. in Form eines oder mehrerer Glasfaserkabel(s). Selbstverständlich ist es möglich, wenigstens ein optisches Element mit mehreren Laserdiodenelementen zu koppeln oder wenigstens ein Laserdiodenelement über geeignete Strahlteilungselemente mit mehreren optischen Elementen zu koppeln.

Unabhängig von der Anordnung der Laserdiodenelemente und der entsprechenden Vorsehung von gekoppelten optischen Elementen, treffen über die Einrichtung erzeugte Laserstrahlen typischerweise unter einem Winkel von ca. 90° bezüglich der Bauebenenebene auf die Bauebene auf.

Eine derartige Einrichtung kann als "Diodenlaser" bezeichnet bzw. erachtet werden, da sie zur Erzeugung von Energie- bzw. Laserstrahlen respektive Energie- bzw. Laserstrahlung Laserdiodenelemente umfasst. Unter einem Laserdiodenelement ist ein zur Erzeugung von Laserstrahlung eingerichtetes Halbleiterelement zu verstehen. Die Eigenschaften, d. h. insbesondere die optischen Eigenschaften, d. h. z. B. die Wellenlänge, des über ein Laserdiodenelement erzeugbaren Laserstrahls sind u. a. von dem oder den eingesetzten Halbleitermaterial(ien) abhängig. Entsprechende Laserdiodenelemente können beispielsweise emittierte Laserleistungen im Bereich zwischen 0,1 und 10 Watt erzeugen; selbstverständlich sind hier Ausnahmen nach oben und/oder unten denkbar.

Die der Einrichtung zugehörigen Laserdiodenelemente bzw. optischen Elemente können, wie erwähnt, direkt in einer der Vorrichtung zugehörigen Bau- oder Prozesskammer, in welcher generative Bauvorgänge durchgeführt werden, angeordnet sein. Die Laserdiodenelemente bzw. optischen Elemente können entsprechend direkt über der Bauebene angeordnet sein; zwischen den Laserdiodenelementen bzw. den optischen Elementen und der Bauebene befindet sich typischerweise kein optisches Maskenbauteil. Entsprechend sind die über die Laserdiodenelemente erzeugbaren bzw. erzeugten respektive die über die optischen Elemente ablenkbaren bzw. abgelenkten Laserstrahlen direkt auf die Bauebene gerichtet und treffen direkt auf die Bauebene. Es ist nicht notwendig, die Laserstrahlen über eine Strahlablenkeinrichtung abzulenken.

Die Laserdiodenelemente bzw. optischen Elemente können an oder in einer hierfür vorgesehenen, insbesondere rahmenartigen, Halteeinrichtung angeordnet sein. Eine solche, typischerweise rahmenartige, Halteeinrichtung umfasst eine Anzahl an vorbestimmbaren oder vorbestimmten Anordnungspositionen, an oder in welchen wenigstens ein Laserdiodenelement bzw. wenigstens ein optisches Element anordenbar ist. Die Laserdiodenelemente bzw. optischen Elemente können in einer solchen Halteeinrichtung an vorbestimmbaren oder vorbestimmten Anordnungspositionen, insbesondere (beschädigungs- bzw. zerstörungsfrei) lösbar, bedarfsweise anordenbar oder angeordnet sein. Eine lösbare Verbindung der Laserdiodenelemente bzw. der optischen Elemente mit der Halteeinrichtung kann z. B. in dem Fall eines Defekts eines Laserdiodenelements bzw. optischen Elements zweckmäßig sein, da das defekte Laserdiodenelement bzw. optische Element ohne Weiteres aus der Halteeinrichtung entnommen und ersetzt werden kann. Die Halteeinrichtung ist typischerweise derart bemessen, dass sie ohne weiteres in einer Bau- oder Prozesskammer der Vorrichtung anordenbar ist.

Die Vorrichtung umfasst weiterhin eine Absaugeinrichtung, welche zur Absaugung von sich prozessbedingt, d. h. während der Durchführung eines generativen Bauprozesses, aus der Bauebene bzw. aus einem an- oder aufgeschmolzenen Bereich der Bauebene gelöstem nicht verfestigten Baumaterial ("Schweiß- oder Sinterspritzer") und/oder prozessbedingt, d. h. während der Durchführung eines generativen Bauprozesses, entstehenden Prozessgasen ("Schweiß- oder Sintergase"), wie z. B. Rauch- bzw. Schmauchgasen, eingerichtet ist. Selbstverständlich umfasst die Absaugeinrichtung wenigstens ein Anschlusselement zum Anschluss der Absaugeinrichtung an eine eine Saugströmung erzeugende Saugströmungsquelle, d. h. z. B. eine Pumpeneinrichtung. Eine entsprechende Saugströmungsquelle kann einen Bestandteil der Absaugeinrichtung bilden.

In der Saugströmung enthaltenes Baumaterial kann vermittels einer Abtrennrichtung, insbesondere einer Filtereinrichtung, aus der Saugströmung abgetrennt, insbesondere gefiltert, werden und, gegebenenfalls nach einer baumaterialspezifischen Wiederaufbereitung, erneut im Rahmen eines generativen Bauprozesses wiederverwendet werden. Eine entsprechende Abtrenneinrichtung kann einen Bestandteil der Vorrichtung bilden.

Die Absaugeinrichtung umfasst wenigstens ein von einer Saugströmung, d. h. z. B. einem, gegebenenfalls inerten, Saugfluidstrom, durchströmbares bzw. im Betrieb der Vorrichtung durchströmtes Absaugelement. Um von der Saugströmung durchströmbar zu sein, umfasst ein entsprechendes Absaugelement wenigstens einen Innen- bzw. Strömungsraum. Ein solcher Innen- bzw. Strömungsraum kann als Strömungskanal bezeichnet bzw. erachtet werden.

In dem wenigstens einen Absaugelement ist wenigstens eine Durchtrittsöffnung, z. B. in Form einer Bohrung, zum Durchtritt eines von der Einrichtung erzeugten direkt auf die Bauebene gerichteten Energiestrahls ausgebildet. Um einen Durchtritt eines entsprechenden Energiestrahls durch eine entsprechende Durchtrittsöffnung zu ermöglichen, erstreckt sich die Durchtrittsöffnung sonach in Erstreckungsrichtung des Energiestrahls, d. h. insbesondere lotrecht relativ zu der Bauebene, durch das Absaugelement.

Die Ausbildung entsprechender Durchtrittsöffnungen ermöglicht eine gezielte bzw. lokale Absaugung prozessbedingt aus der Bauebene gelöster nicht verfestigter Baumaterialpartikel bzw. prozessbedingt entstehender Prozessgase im Bereich ihrer Entstehung, d. h. insbesondere an dem Ort des vermittels des auf die Bauebene auftreffenden Energiestrahls erfolgenden Energieeintrags. Aus der Bauebene aufsteigende(s) Baumaterial bzw. Prozessgas wird durch entsprechende Durchtrittsöffnungen in den von einem Absaugelement umfassten, von der Saugströmung durchströmten Innen- bzw. Strömungsraum gesaugt und sogleich aus der Vorrichtung, zumindest einer vorrichtungsseitigen Bau- oder Prozesskammer, entfernt. Jeweilige absaugelementseitige Durchtrittsöffnungen münden insofern in einen jeweiligen absaugelementseitig begrenzten Strömungs- bzw. Innenraum respektive kommunizieren mit einem solchen. Die Absaugung von "Schweiß- oder Sinterspritzern" resultiert in einer verbesserten Qualität des herzustellenden Objekts.

Selbstverständlich ist es möglich, dass ein Absaugelement mehrere Durchtrittsöffnungen aufweist. Jede Durchtrittsöffnung kann einem von der Einrichtung erzeugbaren bzw. erzeugten direkt auf die Bauebene gerichteten Energiestrahl zuordenbar bzw. zugeordnet sein. Denkbar ist es auch, dass, sofern die Absaugeinrichtung mehrere Absaugelemente umfasst, jedes Absaugelement nur eine (einzige) Durchtrittsöffnung aufweist, welche einem bestimmten von der Einrichtung erzeugten, direkt auf die Bauebene gerichteten Energiestrahl zugeordnet ist. Folglich kann, sofern die Einrichtung als "Diodenlaser" ausgebildet ist, jeder Durchtrittsöffnung ein Laserdiodenelement zuordenbar bzw. zugeordnet sein, so dass der von einem einer bestimmten Durchtrittsöffnung zugeordneten Laserdiodenelement erzeugte Laserstrahl durch die diesem zugeordnete Durchtrittsöffnung tritt.

Ein entsprechendes Absaugelement kann eine längliche, insbesondere rohrartige bzw. - förmige, Allgemeinen hohl(zylindrisch)e, geometrische Gestalt aufweisen. Hierunter sind auch trichterförmige geometrische Gestaltungen entsprechender Absaugelemente zu versehen, deren Querschnitt(sfläche) sich in Strömungsrichtung erweitert oder reduziert. In jedem Fall ist die wenigstens eine absaugelementseitige Durchtrittsöffnung ist sich quer zu dessen Längserstreckung durch das Absaugelement erstreckend ausgebildet. Die Saugströmung durchströmt das Absaugelement sonach in Längsrichtung, d. h. parallel zu dessen Längserstreckung. Grundsätzlich kann das Absaugelement eine beliebige Querschnittsgeometrie aufweisen. Die Strömungseigenschaften, insbesondere die Strömungsgeschwindigkeit, der Saugströmung können durch eine gezielte Beeinflussung der Querschnittsgeometrie, d. h. insbesondere eine gezielte Erweiterung bzw. Reduzierung der Querschnittsfläche, gezielt beeinflusst werden (Venturi-Prinzip). Hierzu kann die erwähnte trichterförmige geometrische Gestalt des Absaugelements beitragen.

Ein Absaugelement, d. h. insbesondere ein eine entsprechende längliche, gegebenenfalls trichterförmige, geometrische Gestalt aufweisendes Absaugelement, ist zweckmäßig sich parallel zu der Bauebene erstreckend oberhalb der Bauebene angeordnet oder ausgebildet. Der Abstand zwischen dem Absaugelement und der Bauebene kann vergleichsweise gering sein. Durch vergleichsweise geringe Abstände zwischen dem Absaugelement und der Bauebene kann die Effizienz der Absaugung von Baumaterial bzw. Prozessgasen erhöht werden. Konkret kann der Abstand zwischen einem Absaugelement und der Bauebene z. B. in einem Bereich zwischen 1 und 10 cm, insbesondere unterhalb 5 cm, liegen. Wie weiter unten näher ausgeführt wird, kann ein Absaugelement in wenigstens einem Bewegungsfreiheitsgrad relativ zu der Bauebene bewegbar gelagert sein, sodass der Abstand zwischen einem Absaugelement und der Bauebene variabel veränderbar sein kann. Gleichermaßen kann ein Absaugelement derart bei Bedarf aus der Bewegungsbahn einer Beschichtereinrichtung bewegt werden, sodass es die Beschichtereinrichtung bei Beschichtungsvorgängen nicht behindert.

Wie erwähnt, kann die Absaugeinrichtung mehrere Absaugelemente umfassen. Auch durch die gezielte Vorsehung, d. h. insbesondere Anordnung und/oder Zusammenschaltung, mehrerer Absaugelemente kann die Effizienz der Absaugung von Baumaterial bzw. Prozessgasen erhöht werden. Durch eine geeignete Auswahl der Anzahl und Anordnung mehrerer Absaugelemente lässt sich die Absaugeinrichtung ohne weiteres an eine beliebige Anzahl an Strahlungsquellen, d. h. insbesondere Laserdiodenelementen, bzw. beliebig geformte Bau- oder Prozesskammern bzw. beliebig geformte Bauebenen anpassen.

Die Anordnung der Absaugelemente betreffend, ist es möglich, dass wenigstens ein erstes Absaugelement in einer ersten Ausrichtung relativ zu der Bauebene angeordnet oder ausgebildet ist und wenigstens ein weiteres bzw. zweites Absaugelement parallel oder winklig, insbesondere lotrecht, relativ zu dem ersten Absaugelement angeordnet oder ausgebildet ist. Insbesondere ist es möglich, Gruppen gleich ausgerichteter paralleler erster Absaugelemente und Gruppen gleich ausgerichteter paralleler weiterer oder zweiter Absaugelemente zu bilden. Mithin kann z. B. eine gitter(netz)artige Anordnung sich an Kreuzungsstellen kreuzender Absaugelemente gebildet sein, wobei eine erste Gruppe eine Mehrzahl an parallel zueinander angeordneten ersten Absaugelementen umfasst, welche jeweils in einer ersten Ausrichtung relativ zu der Bauebene angeordnet oder ausgebildet sind, und wenigstens eine zweite bzw. weitere Gruppe eine Mehrzahl an parallel zueinander angeordneten zweiten bzw. weiteren Absaugelementen umfasst, welche jeweils in einer winklig, insbesondere lotrecht, relativ zu der ersten Ausrichtung verlaufenden weiteren bzw. zweiten Ausrichtung angeordnet oder ausgebildet sind.

Ein längliches, insbesondere rohrartiges bzw. -förmiges, Absaugelement kann wenigstens einen von einer Saugströmung durchströmbaren, insbesondere rohrartigen bzw. -förmigen, Strömungsabschnitt und wenigstens einen mit wenigstens einer Durchtrittsöffnung versehenen Absaug- oder Durchtrittsabschnitt aufweisen, wobei der wenigstens eine Strömungsabschnitt und der wenigstens eine Absaugabschnitt über wenigstens einen Verbindungsabschnitt miteinander kommunizieren, sodass über die Durchtrittsöffnung abgesaugtes, sich prozessbedingt aus der Bauebene gelöstes nicht verfestigtes Baumaterial und/oder prozessbedingt entstehendes Prozessgas über den Verbindungsabschnitt in den Strömungsabschnitt gelangt. Die entsprechende Vorsehung gesonderter Strömungs- und Absaugabschnitte kann im Hinblick auf sich von Zeit zu Zeit ausbildende Ablagerungen bzw. Verunreinigungen des Absaugelements zweckmäßig sein. Der Verbindungsabschnitt zwischen einem jeweiligen Strömungs- und Absaugabschnitt kann gebogen bzw. gekrümmt verlaufen.

In den Verbindungsabschnitt können Stelleinrichtungen, z. B. in Form von oder umfassend Ventileinrichtungen, geschaltet sein, welche die Verbindung zwischen einem jeweiligen Strömungs- und Absaugabschnitt bedarfsweise sperren oder freigeben. Eine zweckmäßige Ausführungsform sieht einen mit mehreren Strömungsabschnitten kommunizierenden Absaugabschnitt vor. Derart ist z. B. die Möglichkeit gegeben, die Verbindung zwischen einem ersten Strömungsabschnitt und einem Absaugabschnitt zu sperren, um den ersten Strömungsabschnitt, z. B. durch Spülen mit einem Reinigungsfluid, von Ablagerungen, Verunreinigungen, etc. zu befreien, wobei ein Absaugen von Baumaterial und/oder Prozessgasen über einen weiteren Strömungsabschnitt weiterhin möglich ist.

Neben einer länglichen, insbesondere rohrartigen bzw. -förmigen, gegebenenfalls trichterförmigen, geometrischen Gestalt kann ein Absaugelement auch eine plattenartige bzw. - förmige geometrische Gestalt aufweisen. Konkret kann ein Absaugelement sonach auch als eine wenigstens eine Durchtrittsöffnung aufweisende, von einer Strömungskanalstruktur durchsetzte Absaugplatte ausgebildet sein. Eine entsprechende Absaugplatte bzw. eine entsprechende Strömungskanalstruktur umfasst eine Anzahl an, gegebenenfalls miteinander kommunizierenden, Strömungskanälen, welche sich durch die Absaugplatte erstrecken. Typischerweise mündet wenigstens eine Durchtrittsöffnung in einen jeweiligen Strömungskanal. Eine entsprechende Absaugplatte ist typischerweise sich parallel zu der Bauebene erstreckend oberhalb der Bauebene angeordnet oder ausgebildet.

Eine entsprechende Absaugplatte ist in ihren geometrischen Abmessungen flächenmäßig so bemessen, dass sie wenigstens einen Teil der Bauebene, insbesondere die gesamte Bauebene, flächenmäßig überdeckt. Eine flächenmäßig vollständige Überdeckung der Bauebene kann im Hinblick auf eine optimale Absaugung entsprechender Baumaterialpartikel bzw. Prozessgase zweckmäßig sein.

Unabhängig von ihrer konkreten geometrischen Gestalt erstrecken sich die Absaugelemente typischerweise in einer sich parallel zu der Bauebene erstreckenden Ebene. Gleichwohl ist es auch denkbar, dass mehrere Absaugelemente, insbesondere versetzt zueinander, in mehreren, typischerweise sich jeweils parallel zu der Bauebene erstreckenden, Ebenen übereinander angeordnet sind. Die, insbesondere versetzte, Anordnung von Absaugelementen in mehreren Ebenen übereinander kann eine baulich besonders kompakte und somit im Hinblick auf die Absaugleistung pro Flächen- bzw. Raumeinheit besonders effiziente Absaugeinrichtung ergeben.

Wiederum unabhängig von ihrer konkreten geometrischen Gestalt können wenigstens zwei Absaugelemente unmittelbar miteinander kommunizieren bzw. miteinander verbunden sein oder mittelbar unter Zwischenschaltung wenigstens eines diese verbindenden ebenso von einer Saugströmung durchströmbaren bzw. im Betrieb der Vorrichtung durchströmten Verbindungselements miteinander kommunizieren bzw. miteinander verbunden sein. Durch über jeweilige Verbindungselemente miteinander verbundene Absaugelemente bzw. durch diese jeweils begrenzte von einer Saugströmung durchströmbare bzw. durchströmte Innenräume kann eine verzweigte Strömungskanalstruktur gebildet sein. Bei einer derartigen Konfiguration kann der Aufbau der Absaugeinrichtung vereinfacht werden, als die Anzahl an Anschlusselementen zum Anschluss der Absaugeinrichtung an eine eine Saugströmung erzeugende Saugströmungsquelle reduziert werden kann.

Weiter oben wurde bereits erwähnt, dass ein Absaugelement in wenigstens einem Bewegungsfreiheitsgrad bewegbar relativ zu der Bauebene gelagert sein kann. Eine Bewegung eines Absaugelements erfolgt über eine geeignete, d. h. insbesondere (elektro)motorische, mit diesem koppelbare oder gekoppelte Antriebs- und/oder Führungseinrichtung. Eine Bewegung eines Absaugelements kann translatorische Bewegungsfreiheitsgrade entlang wenigstens einer Translationsachse und/oder rotatorische Bewegungsfreiheitsgrade um wenigstens eine Rotationsachse beinhalten. Bei einer Bewegung eines Absaugelements kann es sich sonach z. B. um eine Linear-, Dreh-, Kipp- oder Schwenkbewegung handeln. Selbstverständlich sind kombinierte Bewegungen in mehreren unterschiedlichen Bewegungsfreiheitsgraden möglich.

Die bewegbare Lagerung eines Absaugelements ist insbesondere im Zusammenhang mit einer ebenso bewegbaren Lagerung von Laserdiodenelementen zweckmäßig. Die bewegbare Lagerung von Laserdiodenelementen kann wiederum dadurch realisiert sein, dass die Laserdiodenelemente an oder in einer hierfür vorgesehenen, ebenso in wenigstens einem Bewegungsfreiheitsgrad relativ zu der Bauebene bewegbar gelagerten Halteeinrichtung angeordnet sind.

Auch eine Bewegung einer solchen Halteeinrichtung erfolgt über eine geeignete, d. h. insbesondere (elektro)motorische, mit dieser koppelbare oder gekoppelte Antriebs- und/oder Führungseinrichtung. Selbstverständlich kann es sich hierbei um die gleiche Antriebs- und/oder Führungseinrichtung handeln, vermittels welcher auch ein Absaugelement relativ zu der Bauebene bewegt wird. Über die Bewegung der Haltereinrichtung ist es möglich, die Halteeinrichtung nebst daran oder darin angeordneten Laserdiodenelementen im Hinblick auf eine konkrete Belichtungssituation relativ zu der zu belichtenden Bauebene zu bewegen. Analog der Bewegung eines Absaugelements kann auch die Bewegung der Halteeinrichtung translatorische Bewegungsfreiheitsgrade entlang wenigstens einer Translationsachse und/oder rotatorische Bewegungsfreiheitsgrade um wenigstens eine Rotationsachse beinhalten. Bei der Bewegung der Halteeinrichtung kann es sich sonach ebenso z. B. um eine Linear-, Dreh-, Kipp- oder Schwenkbewegung handeln. Selbstverständlich sind ebenso kombinierte Bewegungen in mehreren unterschiedlichen Bewegungsfreiheitsgraden möglich.

Die Bewegungen eines Absaugelements und einer Halteeinrichtung können über eine geeignete Steuereinrichtung derart aufeinander abgestimmt sein, dass die Relativposition jeweiliger an oder in der Halteeinrichtung angeordneter Laserdiodenelemente und jeweiliger absaugelementseitiger Durchtrittsöffnungen zueinander einen Durchtritt der von den Laserdiodenelementen erzeugbaren bzw. erzeugten Laserstrahlen durch jeweilige absaugelementseitige Durchtrittsöffnungen ermöglicht. Insbesondere kann eine Abstimmung der Bewegungen eines Absaugelements und einer Halteeinrichtung derart erfolgen, dass die Relativpositionen einander zugeordneter Durchtrittsöffnungen und Laserdiodenelemente unverändert bleibt.

Bewegungen des Absaugelements bzw. der Halteeinrichtung können simultan mit der Bestrahlung der Bauebene erfolgen. Die Absaugelemente bzw. die Halteeinrichtung kann im Zusammenhang mit der Bestrahlung der Bauebene auch in unterschiedlichen Bewegungsfreiheitsgraden bzw. in unterschiedlichen Bewegungsbahnen relativ zu der Bauebene bewegt werden. Derart können unterschiedliche Verfestigungsstrukturen, d. h. z. B. Schweißnähte, in der zu verfestigenden Baumaterialschicht ausgebildet und Eigenspannungen in dem herzustellenden Objekt reduziert werden, was sich positiv auf die Qualität des herzustellenden Objekts auswirkt. Das Absaugelement bzw. die Halteeinrichtung kann zunächst z. B. entlang einer durch eine erste, z. B. lineare, Bewegungsachse definierten ersten Bewegungsbahn über die Bauebene und nachfolgend entlang einer durch eine weitere, z. B. lineare, Bewegungsachse definierten weiteren Bewegungsbahn über die Bauebene bewegt werden. Die weitere Bewegungsbahn kann z. B. winklig, insbesondere orthogonal, zu der ersten Bewegungsbahn verlaufen.

Für den Fall, in dem eine Halteeinrichtung nicht relativ zu der Bauebene bewegbar gelagert ist, kann die Einrichtung eine Mehrzahl an Laserdiodenelementen bzw. optischen Elementen umfassen, welche wenigstens einen Teil bzw. eine Teilfläche der Bauebene, insbesondere die vollständige, Bauebene flächenmäßig abdecken. Insbesondere bei einer flächenmäßig vollständigen Abdeckung der Bauebene durch eine entsprechende flächenmäßig korrespondierende Anordnung von Laserdiodenelementen bzw. optischen Elementen ist es nicht notwendig, die Halteeinrichtung nebst daran oder darin angeordneten Laserdiodenelementen bzw. optischen Elementen im Hinblick auf eine konkrete Belichtungssituation relativ zu der Bauebene zu bewegen. Es sind hier keine mit der Halteeinrichtung koppelbaren oder gekoppelten Antriebs- und/oder Führungseinrichtungen vorzusehen, was den anlagen- bzw. steuerungstechnischen Aufbau der Vorrichtung gegebenenfalls vereinfacht.

Unabhängig von der bewegbaren oder nicht bewegbaren Lagerung einer entsprechenden Halteeinrichtung relativ zu der Bauebene kann (auch) wenigstens ein Laserdiodenelement bzw. wenigstens ein optisches Element in wenigstens einem Bewegungsfreiheitsgrad relativ zu der Halteeinrichtung und somit auch relativ zu der Bauebene bewegbar an oder in der Halteeinrichtung anordenbar oder angeordnet sein. Über die Bewegung einzelner, mehrerer oder sämtlicher Laserdiodenelemente bzw. optischer Elemente relativ zu der Halteeinrichtung ist es z. B. möglich, die Laserdiodenelemente bzw. optischen Elemente im Hinblick auf eine konkrete Belichtungssituation relativ zu der Bauebene zu bewegen. Ebenso ist es möglich, einzelne, mehrere oder sämtliche Laserdiodenelemente bzw. optischen Elemente in einen deaktivierten Zustand, in welchem ein jeweiliger erzeugbarer bzw. erzeugter Laserstrahl von der Bauebene weg gerichtet ist, zu bewegen, d. h. insbesondere zu verkippen bzw. zu verschwenken. Auch die Bewegung eines Laserdiodenelements bzw. optischen Elements kann translatorische Bewegungsfreiheitsgrade entlang wenigstens einer Translationsachse und/oder rotatorische Bewegungsfreiheitsgrade um wenigstens eine Rotationsachse beinhalten. Auch bei der Bewegung eines Laserdiodenelements bzw. eines optischen Elements kann es sich sonach z. B. um eine Linear-, Dreh-, Kipp- oder Schwenkbewegung handeln. Selbstverständlich sind auch hier kombinierte Bewegungen in mehreren unterschiedlichen Bewegungsfreiheitsgraden möglich.

Bewegungen der Laserdiodenelemente bzw. optischen Elemente können ebenso simultan mit der Belichtung der Bauebene erfolgen. Einzelne, mehrere oder sämtliche Laserdiodenelemente bzw. optischen Elemente können im Zusammenhang mit der Bestrahlung der Bauebene auch in unterschiedlichen Bewegungsfreiheitsgraden bzw. in unterschiedlichen Bewegungsbahnen relativ zu der Bauebene bewegt werden. Auch derart können unterschiedliche Verfestigungsstrukturen, d. h. z. B. Schweißnähte, in der zu verfestigenden Baumaterialschicht ausgebildet und prozessbedingt entstehende Eigenspannungen in dem herzustellenden Objekt reduziert werden, was sich positiv auf die Qualität des herzustellenden Objekts auswirkt. Einzelne, mehrere oder sämtliche Laserdiodenelemente bzw. optischen Elemente können zunächst z. B. entlang einer durch eine erste, z. B. lineare, Bewegungsachse definierten ersten Bewegungsbahn über eine Bauebene und nachfolgend entlang einer durch weitere, z. B. lineare, Bewegungsachse definierten weiteren Bewegungsbahn über die Bauebene bewegt werden. Die weitere Bewegungsbahn kann z. B. winklig, insbesondere orthogonal, zu der ersten Bewegungsbahn verlaufen.

Die Erfindung betrifft weiterhin eine Absaugeinrichtung für eine (wie beschriebene) Vorrichtung zur generativen Herstellung eines dreidimensionalen Objekts durch sukzessive schichtweise selektive Verfestigung von Baumaterialschichten aus verfestigbarem Baumaterial vermittels wenigstens eines Energiestrahls, umfassend wenigstens eine Einrichtung zur Erzeugung wenigstens eines Energiestrahls zur schichtweisen selektiven Verfestigung einzelner Baumaterialschichten aus verfestigbarem Baumaterial, wobei die Einrichtung zur Erzeugung eines direkt auf die Bauebene gerichteten Energiestrahls eingerichtet ist. Die Absaugeinrichtung ist zur Absaugung von sich prozessbedingt aus einer Bauebene gelöstem nicht verfestigten Baumaterial und/oder prozessbedingt entstehenden Prozessgasen eingerichtet und zeichnet sich dadurch aus, dass sie wenigstens ein von einer Saugströmung durchströmbares oder durchströmtes Absaugelement umfasst, wobei in dem wenigstens einen Absaugelement wenigstens eine Durchtrittsöffnung zum Durchtritt eines von einer vorrichtungsseitigen Einrichtung erzeugten direkt auf die Bauebene gerichteten Energiestrahls ausgebildet ist. Sämtliche Ausführungen im Zusammenhang mit der Vorrichtung gelten analog für die Absaugeinrichtung.

Überdies betrifft die Erfindung ein Verfahren zur generativen Herstellung wenigstens eines dreidimensionalen Objekts durch sukzessive schichtweise selektive Verfestigung einzelner Baumaterialschichten aus verfestigbarem Baumaterial vermittels eines von einer Strahlungserzeugungseinrichtung erzeugten Energiestrahls. Das Verfahren zeichnet sich dadurch aus, dass zur Absaugung von sich prozessbedingt aus einer Bauebene gelöstem nicht verfestigten Baumaterial und/oder prozessbedingt entstehenden Prozessgasen eine wie beschriebene Absaugeinrichtung verwendet wird. Sämtliche Ausführungen im Zusammenhang mit der Vorrichtung gelten auch analog für das Verfahren.

Die Erfindung ist anhand von Ausführungsbeispielen in den Zeichnungsfiguren näher erläutert. Dabei zeigen:

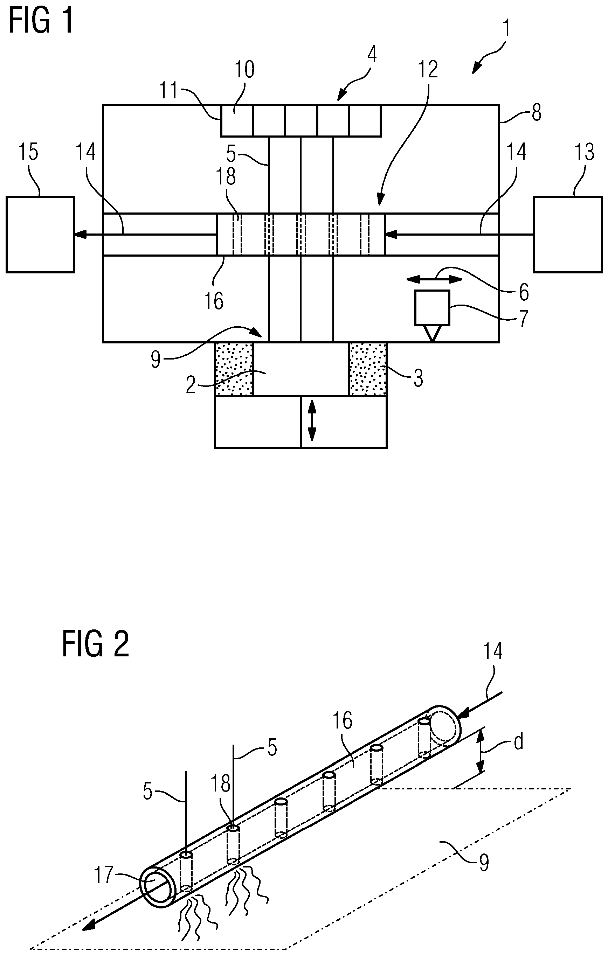

Fig. 1-7 je eine Prinzipdarstellung einer Vorrichtung zur generativen Herstellung eines dreidimensionalen Objekts gemäß einem Ausführungsbeispiel.

Fig. 1 zeigt eine Prinzipdarstellung einer Vorrichtung 1 gemäß einem Ausführungsbeispiel. Die Vorrichtung 1 dient zur generativen Herstellung eines dreidimensionalen Objekts 2, d. h. beispielsweise eines technischen Bauteils bzw. einer technischen Bauteilgruppe, durch sukzessives schichtweises selektives Verfestigen von Baumaterialschichten aus einem verfestigbaren Baumaterial 3 vermittels wenigstens eines von einer Einrichtung 4 (Laserstrahlerzeugungseinrichtung) erzeugten Energie- bzw. Laserstrahls 5.

Die sukzessive schichtweise selektive Verfestigung jeweiliger zu verfestigender Baumaterialschichten erfolgt derart, dass ein oder mehrere von der Einrichtung 4 erzeugte Laserstrahlen 5 selektiv auf bestimmte zu verfestigende, jeweiligen schichtbezogenen Querschnittsgeometrien des herzustellenden Objekts 2 entsprechende Bereiche jeweiliger Baumaterialschichten gerichtet werden.

Jeweilige zu verfestigende Baumaterialschichten werden vermittels einer, wie durch den horizontal ausgerichteten Pfeil 6 angedeutet, bewegbar gelagerten Beschichtereinrichtung 7 in einer Baukammer 8 der Vorrichtung 1 gebildet. In der Baukammer 8 herrscht typischerweise eine Schutzgasatmosphäre, d. h. z. B. eine Argon- oder Stickstoffatmosphäre.

Bei dem verfestigbaren Baumaterial 3 kann es sich um ein Metallpulver(gemisch), d. h. z. B. um ein Aluminiumpulver, und/oder um ein Kunststoffpulver(gemisch), d. h. z. B. um ein Polyetheretherketonpulver, und/oder um Keramikpulver(gemisch), d. h. z. B. um ein Aluminiumoxidpulver, handeln.

Die Einrichtung 4 ist direkt in der Baukammer 8 angeordnet und umfasst zur Erzeugung von Laserstrahlen 5eine Mehrzahl an, z. B. matrixartig, d. h. in Reihen und Spalten, angeordneten Laserdiodenelementen 10, welche jeweils zur Erzeugung eines direkt auf die Bauebene 9 gerichteten Laserstrahls 5 eingerichtet sind. Die über die Laserdiodenelemente 10 erzeugten Laserstrahlen 5 treffen sonach unter einem Winkel von 90° bezüglich der Bauebenenebene auf die Bauebene 9 auf. Die Einrichtung 4 kann als "Diodenlaser" bezeichnet bzw. erachtet werden.

Die Laserdiodenelemente 10 sind an oder in einer hierfür vorgesehenen, insbesondere rahmenartigen, Halteeinrichtung 11 angeordnet. Die Halteeinrichtung 11 umfasst eine Anzahl an vorbestimmbaren oder vorbestimmten Anordnungspositionen, an oder in welchen wenigstens ein Laserdiodenelement 10 anordenbar ist. Die Laserdiodenelemente 10 sind in der Halteeinrichtung 11 an vorbestimmbaren oder vorbestimmten Anordnungspositionen, insbesondere (beschädigungs- bzw. zerstörungsfrei) lösbar, bedarfsweise anordenbar oder angeordnet.

Die Vorrichtung 1 umfasst weiterhin eine Absaugeinrichtung 12, welche zur Absaugung von sich prozessbedingt, d. h. während der Durchführung eines generativen Bauprozesses, aus der Bauebene 9 bzw. aus einem an- oder aufgeschmolzenen Bereich der Bauebene 9 gelöstem nicht verfestigten Baumaterial 3 ("Schweiß- oder Sinterspritzer") und/oder prozessbedingt, d. h. während der Durchführung eines generativen Bauprozesses, entstehenden Prozessgasen, d. h. z. B. Rauch- bzw. Schmauchgasen, eingerichtet ist. Die Absaugeinrichtung 12 ist über ein nicht näher gezeigtes Anschlusselement an eine eine durch den Pfeil 14 angedeutete Saugströmung erzeugende Saugströmungsquelle 13, d. h. z. B. eine Pumpeneinrichtung, angeschlossen. Bei der Saugströmung handelt es sich um einen, gegebenenfalls inerten, Saugfluidstrom, d. h. z. B. einen Argon- oder Stickstoffstrom.

In der Saugströmung enthaltenes Baumaterial 3 kann vermittels einer optionalen Abtrennrichtung 15, insbesondere einer Filtereinrichtung, aus der Saugströmung abgetrennt, insbesondere gefiltert, werden und, gegebenenfalls nach einer baumaterialspezifischen Wiederaufbereitung, erneut im Rahmen der Durchführung generativer Bauprozesse wiederverwendet werden.

Die Absaugeinrichtung 12 umfasst wenigstens ein von der Saugströmung durchströmtes Absaugelement 16. Unterschiedliche Ausführungsbeispiele entsprechender Absaugelemente 16 sind in den Fig. 2-4 gezeigt.

Anhand des in Fig. 2 gezeigten Ausführungsbeispiels ist ersichtlich, dass ein Absaugelement 16 einen Innen- bzw. Strömungsraum 17 begrenzt. Ein solcher Innen- bzw. Strömungsraum 17 kann als Strömungskanal bezeichnet bzw. erachtet werden. Anhand von Fig. 2 ist weiter ersichtlich, dass in einem Absaugelement 16 mehrere Durchtrittsöffnungen 18, z. B. in Form von Bohrungen, zum jeweiligen Durchtritt eines von der Einrichtung 4 erzeugten direkt auf die Bauebene 9 gerichteten Laserstrahls 5 ausgebildet sind. Jeweilige Durchtrittsöffnungen 18 münden in den absaugelementseitig begrenzten Innen- bzw. Strömungsraum 17. Um einen Durchtritt eines entsprechenden Laserstrahls 5 durch eine entsprechende Durchtrittsöffnung 18 zu ermöglichen, erstrecken sich die Durchtrittsöffnungen 18 in Erstreckungsrichtung der Laserstrahlen 5, d. h. insbesondere lotrecht relativ zu der Bauebene 9, durch das Absaugelement 16.

Die Ausbildung entsprechender Durchtrittsöffnungen 18 ermöglicht eine gezielte bzw. lokale Absaugung prozessbedingt aus der Bauebene 9 gelöster nicht verfestigter Baumaterialpartikel bzw. prozessbedingt entstehender Prozessgase im Bereich ihrer Entstehung, d. h. insbesondere an dem Ort des vermittels eines auf die Bauebene 9 auftreffenden Laserstrahls 5 erfolgenden Energieeintrags. Aus der Bauebene 9 aufsteigende(s) Baumaterial bzw. Prozessgas wird durch entsprechende Durchtrittsöffnungen 18 in den durch ein Absaugelement 16 begrenzten, von der Saugströmung durchströmten Innen- bzw. Strömungsraum 17 gesaugt und sogleich aus der Vorrichtung 1, zumindest der Baukammer 8, entfernt. Die Absaugung von "Schweiß- oder Sinterspritzern" resultiert in einer verbesserten Qualität des herzustellenden Objekts 2.

Jede Durchtrittsöffnung 18 ist einem von der Einrichtung 4 erzeugbaren bzw. erzeugten direkt auf die Bauebene 9 gerichteten Laserstrahl 5 zuordenbar bzw. zugeordnet. Jeder Durchtrittsöffnung 18 ist sonach ein Laserdiodenelement 10 zuordenbar bzw. zugeordnet, so dass der von einem einer bestimmten Durchtrittsöffnung 18 zugeordneten Laserdiodenelement 10 erzeugte Laserstrahl 5 durch die diesem zugeordnete Durchtrittsöffnung 18 tritt.

In dem in Fig. 2 gezeigten Ausführungsbeispiel weist das Absaugelement 16 eine längliche, insbesondere rohrartige bzw. -förmige, Allgemeinen hohl(zylindrisch)e, geometrische Gestalt mit einer beispielhaft runden bzw. rundlichen Querschnittsgeometrie auf. Jeweilige absaugelementseitige Durchtrittsöffnungen 18 sind sich quer zu der Längserstreckung des jeweiligen Absaugelements 16 durch das jeweilige Absaugelement 16 erstreckend ausgebildet. Die Saugströmung durchströmt das Absaugelement 16 in Längsrichtung, d. h. parallel zu dessen Längserstreckung.

Das Absaugelement 16 ist sich parallel zu der Bauebene 9 erstreckend oberhalb der Bauebene 9 angeordnet. Der Abstand d zwischen dem Absaugelement 16 und der Bauebene 9 kann vergleichsweise gering sein. Durch vergleichsweise geringe Abstände d zwischen dem Absaugelement 16 und der Bauebene 9 kann die Effizienz der Absaugung von Baumaterial 3 bzw. Prozessgasen erhöht werden. Konkret kann der Abstand d zwischen dem Absaugelement 16 und der Bauebene 9 z. B. in einem Bereich zwischen 1 und 10 cm, insbesondere unterhalb 5 cm, liegen.

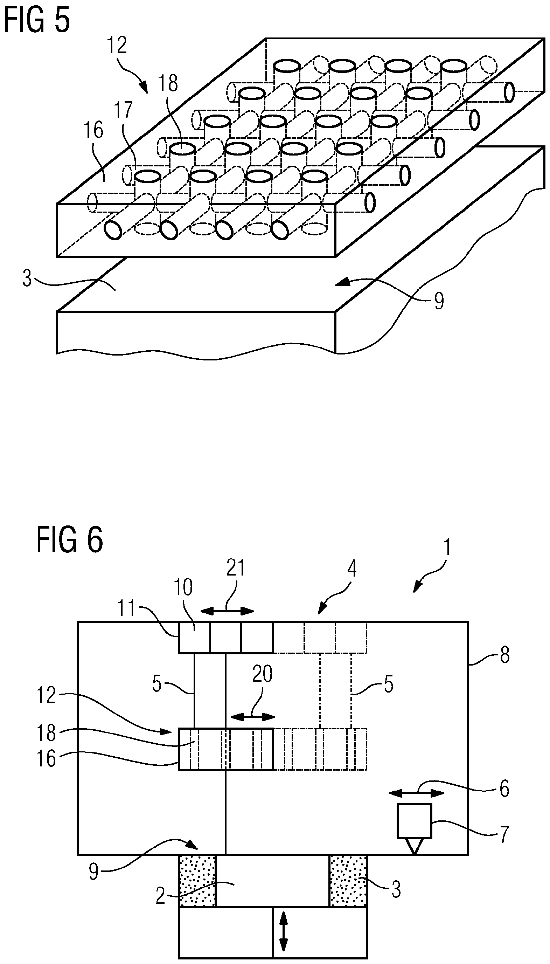

Das Absaugelement 16 kann in wenigstens einem Bewegungsfreiheitsgrad relativ zu der Bauebene 9 bewegbar gelagert sein, sodass der Abstand d zwischen dem Absaugelement 16 und der Bauebene 9 variabel veränderbar ist (vgl. Fig. 5 mit zugehöriger Beschreibung). Gleichermaßen kann das Absaugelement 16 derart bei Bedarf aus der Bewegungsbahn der Beschichtereinrichtung 7 bewegt werden, sodass es diese bei Beschichtungsvorgängen nicht behindert.

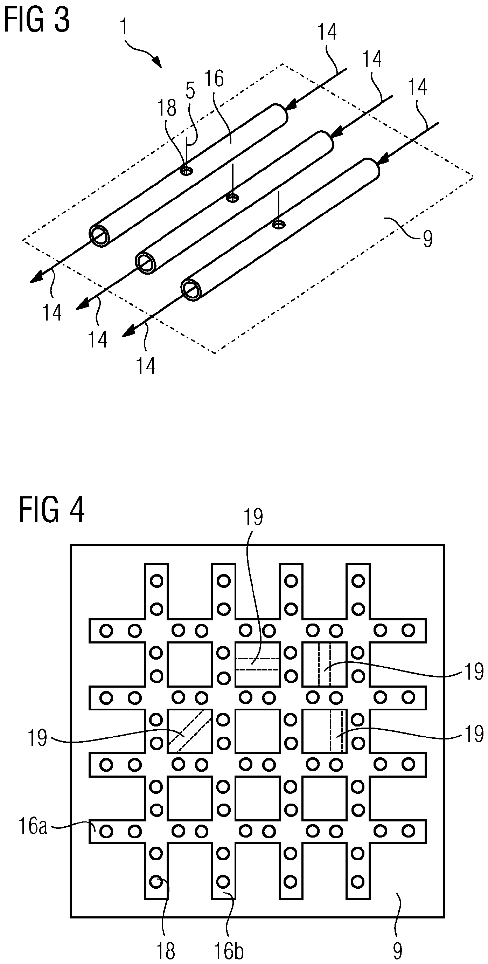

Fig. 3 zeigt ein Ausführungsbeispiel mehrerer benachbart, d. h. typischerweise parallel, angeordneter Absaugelemente 16, welche im Unterschied zu dem in Fig. 2 gezeigten Ausführungsbeispiel jeweils nur mit einer (einzigen) Durchtrittsöffnung 18 versehen sind. Eine jeweilige absaugelementseitige Durchtrittsöffnung 18 ist einem bestimmten von der Einrichtung 4 erzeugten, direkt auf die Bauebene 9 gerichteten Energiestrahl 5 und somit einem bestimmten Laserdiodenelement 10 zugeordnet.

Anhand von Fig. 4, welche eine Aufsicht auf die Bauebene 9 zeigt, ist ersichtlich, dass die Absaugeinrichtung 12 mehrere Absaugelemente 16 umfassen kann. Durch eine geeignete Auswahl der Anzahl und Anordnung mehrerer Absaugelemente 16 lässt sich die Absaugeinrichtung 12 ohne weiteres an eine beliebige Anzahl an Strahlungsquellen, d. h. insbesondere Laserdiodenelemente 10, bzw. beliebig geformte Baukammern 8 bzw. beliebig geformte Bauebenen 9 anpassen.

In dem in Fig. 4 gezeigten Ausführungsbeispiel sind erste Absaugelemente 16a, welche sich in einer ersten Ausrichtung (horizontalen Ausrichtung) erstreckend relativ zu der Bauebene 9 angeordnet sind, und zweite Absaugelemente 16b, welche sich winklig, insbesondere lotrecht, relativ zu den ersten Absaugelementen 16a erstreckend angeordnet sind, dargestellt.

Es ist sonach möglich, Gruppen gleich bzw. parallel ausgerichteter erster Absaugelemente 16a und Gruppen gleich bzw. parallel ausgerichteter zweiter Absaugelemente 16b zu bilden. Hieraus kann sich die in Fig. 3 gezeigte gitter(netz)artige Anordnung sich an Kreuzungsstellen kreuzender Absaugelemente 16a, 16b ergeben. Dabei umfasst eine erste Gruppe eine Mehrzahl an parallel zueinander angeordneten bzw. ausgerichteten ersten Absaugelementen 16a, welche jeweils in einer ersten Ausrichtung relativ zu der Bauebene 9 angeordnet sind, und eine zweite Gruppe eine Mehrzahl an parallel zueinander angeordneten bzw. ausgerichteten zweiten Absaugelementen 16b, welche jeweils in einer winklig, insbesondere lotrecht, relativ zu der ersten Ausrichtung verlaufenden zweiten Ausrichtung angeordnet sind.

Anhand von Fig. 4 ist ersichtlich, dass wenigstens zwei Absaugelemente 16, 16a, 16b unmittelbar miteinander kommunizieren bzw. miteinander verbunden sein können. In strichlierter Darstellung ist zudem die Möglichkeit angedeutet, dass wenigstens zwei Absaugelemente 16, 16a, 16b mittelbar unter Zwischenschaltung wenigstens eines diese verbindenden ebenso von einer Saugströmung durchströmten Verbindungselements 19 miteinander kommunizieren bzw. miteinander verbunden sein können. Durch über jeweilige Verbindungselemente 19 miteinander verbundene Absaugelemente 16, 16a, 16b bzw. durch diese jeweils begrenzte von einer Saugströmung durchströmbare bzw. durchströmte Innen- bzw. Strömungsräume 17 kann eine verzweigte Strömungskanalstruktur gebildet sein.

Anhand des in Fig. 5 in einer perspektivischen Ansicht eines Ausschnitts aus der Baukammer 8 der Vorrichtung 1 gezeigten Ausführungsbeispiels ist ersichtlich, dass ein Absaugelement 16 auch eine plattenartige bzw. -förmige geometrische Gestalt aufweisen kann. Das in Fig. 5 gezeigte Absaugelement 16 ist als eine mehrere matrixartig, d. h. in Reihen und Spalten angeordnete, Durchtrittsöffnungen 18 aufweisende, von einer Strömungskanalstruktur durchsetzte Absaugplatte ausgebildet. Die Absaugplatte umfasst eine Anzahl an, miteinander kommunizierenden, strichliert dargestellten, eine Strömungskanalstruktur bildende kanalartige Innen- bzw. Strömungsräume 17, welche sich durch die Absaugplatte erstrecken. Ersichtlich mündet wenigstens eine Durchtrittsöffnung 18 in einen jeweiligen Innen- bzw. Strömungsraum 17. Die Innen- bzw. Strömungsräume 17 können als Strömungskanäle bezeichnet bzw. erachtet werden.

Die Absaugplatte ist in ihren geometrischen Abmessungen flächenmäßig so bemessen, dass sie die Bauebene 9 flächenmäßig vollständig überdeckt. Die flächenmäßig vollständige Überdeckung der Bauebene 9 ist im Hinblick auf eine optimale Absaugung entsprechender Baumaterialpartikel bzw. Prozessgase zweckmäßig.

In den Fig. ist jeweils eine parallel zu der Bauebene 9 erstreckende Anordnung der Absaugelemente 16 dargestellt. Gleichwohl ist es auch denkbar, dass mehrere Absaugelemente 16, insbesondere versetzt zueinander, in mehreren, typischerweise sich jeweils parallel zu der Bauebene 9 erstreckenden, Ebenen übereinander angeordnet sind.

Anhand des in Fig. 6 gezeigten Ausführungsbeispiels soll erläutert werden, dass ein Absaugelement 16, wie erwähnt, in wenigstens einem Bewegungsfreiheitsgrad bewegbar relativ zu der Bauebene 9 gelagert sein kann. Die bewegbare Lagerung eines Absaugelements 16 ist grundsätzlich unabhängig von dessen geometrischer Gestalt. Bewegungen des Absaugelements 16 erfolgen über eine geeignete, d. h. insbesondere (elektro)motorische, mit diesem koppelbare oder gekoppelte Antriebs- und/oder Führungseinrichtung (nicht gezeigt). In dem in Fig. 6 gezeigten Ausführungsbeispiel beinhaltet eine Bewegung des Absaugelements 16 eine translatorische Bewegung entlang der durch den Doppelpfeil 20 angedeuteten Translationsachse. Das Absaugelement 16 ist strichliert in einer zweiten Position, in welche sie ausgehend von einer ersten Position bewegt wurde, dargestellt. Grundsätzlich kann eine Bewegung eines Absaugelements 16 translatorische Bewegungsfreiheitsgrade entlang einer Translationsachse und/oder rotatorische Bewegungsfreiheitsgrade um eine Rotationsachse beinhalten. Selbstverständlich sind kombinierte Bewegungen in mehreren unterschiedlichen Bewegungsfreiheitsgraden möglich.

Die bewegbare Lagerung eines Absaugelements 16 ist insbesondere im Zusammenhang mit einer ebenso bewegbaren Lagerung von Laserdiodenelementen 10 zweckmäßig. Die bewegbare Lagerung von Laserdiodenelementen 10 ist in dem in Fig. 6 gezeigten Ausführungsbeispiel dadurch realisiert, dass die Laserdiodenelemente 10 an oder in einer ebenso in wenigstens einem Bewegungsfreiheitsgrad bewegbar relativ zu der Bauebene 9 gelagerten Halteeinrichtung 11 angeordnet sind.

Bewegungen der Halteeinrichtung 11 erfolgen ebenso über eine geeignete, d. h. insbesondere (elektro)motorische, mit dieser koppelbare oder gekoppelte Antriebs- und/oder Führungseinrichtung (nicht gezeigt). Selbstverständlich kann es sich hierbei um die gleiche Antriebs- und/oder Führungseinrichtung handeln, vermittels welcher auch das Absaugelement 16 relativ zu der Bauebene 9 bewegt wird. In dem in Fig. 6 gezeigten Ausführungsbeispiel beinhaltet eine Bewegung der Halteeinrichtung 11 eine translatorische Bewegung entlang der durch den Doppelpfeil 21 angedeuteten Translationsachse. Die Halteeinrichtung 11 ist strichliert in einer zweiten Position, in welche sie ausgehend von einer ersten Position bewegt wurde, dargestellt. Analog der Bewegung eines Absaugelements 16 kann auch die Bewegung der Halteeinrichtung 11 translatorische Bewegungsfreiheitsgrade entlang einer Translationsachse und/oder rotatorische Bewegungsfreiheitsgrade um eine Rotationsachse beinhalten. Selbstverständlich sind ebenso kombinierte Bewegungen in mehreren unterschiedlichen Bewegungsfreiheitsgraden möglich.

Bewegungen des Absaugelements 16 und der Halteeinrichtung 11 können über eine geeignete Steuereinrichtung (nicht gezeigt) derart aufeinander abgestimmt sein, dass die Relativposition jeweiliger an oder in der Halteeinrichtung 11 angeordneter Laserdiodenelemente 10 und jeweiliger absaugelementseitiger Durchtrittsöffnungen 18 zueinander einen Durchtritt der von den Laserdiodenelementen 10 erzeugbaren bzw. erzeugten Laserstrahlen 5 durch jeweilige absaugelementseitige Durchtrittsöffnungen 18 ermöglicht. Insbesondere kann eine Abstimmung der Bewegungen des Absaugelements 16 und der Halteeinrichtung 11 derart erfolgen, dass die Relativpositionen einander zugeordneter Durchtrittsöffnungen 18 und Laserdiodenelemente 10 unverändert bleibt.

Bewegungen des Absaugelements 16 bzw. der Halteeinrichtung 11 können simultan mit der Bestrahlung der Bauebene 9 erfolgen. Das Absaugelement 16 bzw. die Halteeinrichtung 11 kann im Zusammenhang mit der Bestrahlung der Bauebene 9 auch in unterschiedlichen Bewegungsfreiheitsgraden bzw. in unterschiedlichen Bewegungsbahnen relativ zu der Bauebene 9 bewegt werden. Derart können unterschiedliche Verfestigungsstrukturen, d. h. z. B. Schweißnähte, in der zu verfestigenden Baumaterialschicht ausgebildet und Eigenspannungen in dem herzustellenden Objekt 2 reduziert werden, was sich positiv auf die Qualität des herzustellenden Objekts 2 auswirkt. Das Absaugelement 16 bzw. die Halteeinrichtung 11 kann zunächst z. B. entlang einer durch eine erste, z. B. lineare, Bewegungsachse definierten ersten Bewegungsbahn über die Bauebene 9 und nachfolgend entlang einer durch eine weitere, z. B. lineare, Bewegungsachse definierten weiteren Bewegungsbahn über die Bauebene 9 bewegt werden. Die weitere Bewegungsbahn kann z. B. winklig, insbesondere orthogonal, zu der ersten Bewegungsbahn verlaufen.

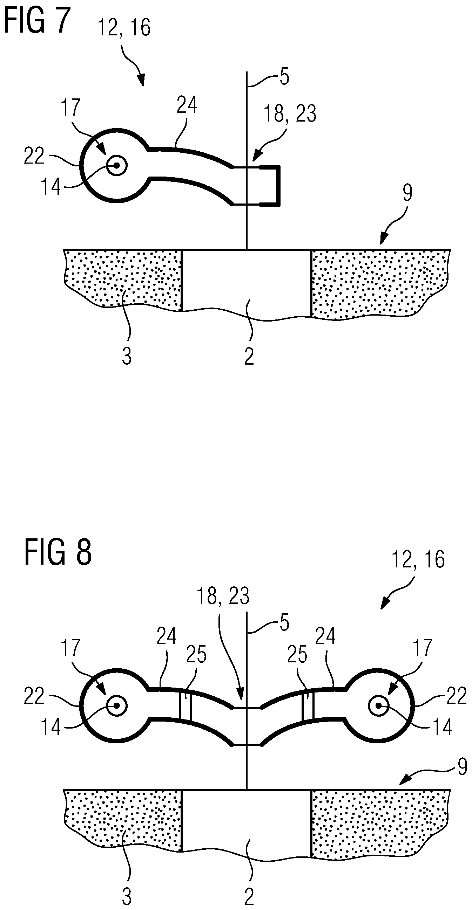

Fig. 7 zeigt ein weiteres Ausführungsbeispiel eines Absaugelements 16. Das in Fig. 7 in einer Querschnittsansicht gezeigte Absaugelement 16 weist ebenso eine längliche geometrische Gestalt auf. Das Absaugelement 16 weist einen von einer Saugströmung durchströmbaren, rohrartigen bzw. -förmigen Strömungsabschnitt 22 und einen mit wenigstens einer Durchtrittsöffnung 18 versehenen Absaugabschnitt 23 auf. Selbstverständlich könnten mehrere entsprechende Absaugabschnitte 23 vorhanden sein. Der Strömungsabschnitt 22 begrenzt einen Innen- bzw. Strömungsraum 17. Der Strömungsabschnitt 22 und der Absaugabschnitt 23 sind über einen Verbindungsabschnitt 24 miteinander kommunizierend verbunden, sodass über die Durchtrittsöffnung 18 abgesaugtes Baumaterial 3 und/oder Prozessgas über den Verbindungsabschnitt 24 in den Strömungsabschnitt 22 gelangt. Der Verbindungsabschnitt 24 kann, wie in Fig. 7 beispielhaft dargestellt, nach Art eines "Krümmers" gebogen bzw. gekrümmt verlaufen.

Fig. 8 zeigt ein weiteres Ausführungsbeispiel eines Absaugelements 16, welches im Unterschied zu dem in Fig. 7 gezeigten Ausführungsbeispiel zwei Strömungsabschnitte 22 aufweist. In den Verbindungsabschnitt 24 sind zwei Stelleinrichtungen 25 in Form von Ventileinrichtungen geschaltet, welche die Verbindung zwischen einem jeweiligen Strömungsabschnitt 22 und dem Absaugabschnitt 23 bedarfsweise sperren oder freigeben. Derart ist die Möglichkeit gegeben, die Verbindung zwischen einem ersten Strömungsabschnitt 22 und dem Absaugabschnitt 23 zu sperren, um den ersten Strömungsabschnitt 22, z. B. durch Spülen mit einem Reinigungsfluid, von Ablagerungen, Verunreinigungen, etc. zu befreien, wobei ein Absaugen von Baumaterial 3 und/oder Prozessgasen über den anderen Strömungsabschnitt 23 weiterhin möglich ist.

Vermittels der in den in den Fig. gezeigten Ausführungsbeispielen gezeigten Vorrichtungen 1 lässt sich ein Verfahren zur generativen Herstellung eines Objekts 2 durch sukzessive schichtweise selektive Verfestigung einzelner Baumaterialschichten aus verfestigbarem Baumaterial 3 vermittels eines Laserstrahls 5 implementieren. Bei dem Verfahren kann es sich grundsätzlich um ein selektives Laserschweißverfahren oder um ein selektives Lasersinterverfahren handeln. Das Verfahren zeichnet sich dadurch aus, dass zur Absaugung von sich prozessbedingt aus einer Bauebene 9 gelöstem nicht verfestigten Baumaterial 3 und/oder prozessbedingt entstehenden Prozessgasen eine entsprechende Absaugeinrichtung 12 verwendet wird.

### BEZUGSZEICHENLISTE

- 1: Vorrichtung
- 2: Objekt
- 3: Baumaterial
- 4: Einrichtung
- 5: Laserstrahl
- 6: Doppelpfeil
- 7: Beschichtereinrichtung
- 8: Baukammer
- 9: Bauebene
- 10: Laserdiodenelement
- 11: Halteeinrichtung
- 12: Absaugeinrichtung
- 13: Saugströmungsquelle
- 14: Pfeil
- 15: Abtrennrichtung
- 16: Absaugelement
- 16a: Absaugelement
- 16b: Absaugelement
- 17: Innen- bzw. Strömungsraum
- 18: Durchtrittsöffnung
- 19: Verbindungselement
- 20: Doppelpfeil
- 21: Doppelpfeil
- 22: Strömungsabschnitt
- 23: Absaugabschnitt
- 24: Verbindungsabschnitt
- d: Abstand

## Patentansprüche

1. Vorrichtung (1) zur generativen Herstellung eines dreidimensionalen Objekts (2) durch sukzessive schichtweise selektive Verfestigung von Baumaterialschichten aus verfestigbarem Baumaterial (3) vermittels wenigstens eines Energiestrahls (5), umfassend wenigstens eine Einrichtung (4) zur Erzeugung wenigstens eines Energiestrahls (5) zur schichtweisen selektiven Verfestigung einzelner Baumaterialschichten aus verfestigbarem Baumaterial (3), wobei die wenigstens eine Einrichtung (4) zur Erzeugung eines direkt auf eine Bauebene (9) gerichteten Energiestrahls (5) eingerichtet ist, **gekennzeichnet durch** eine Absaugeinrichtung (12), welche zur Absaugung von sich prozessbedingt aus der Bauebene (9) gelöstem nicht verfestigten Baumaterial (3) und/oder prozessbedingt entstehenden Prozessgasen eingerichtet ist, wobei die Absaugeinrichtung (12) wenigstens ein von einer Saugströmung durchströmbares Absaugelement (16) umfasst, wobei in dem wenigstens einen Absaugelement (16) wenigstens eine Durchtrittsöffnung (18) zum Durchtritt des von der wenigstens einen Einrichtung (4) erzeugten direkt auf die Bauebene (9) gerichteten Energiestrahls (5) ausgebildet ist.

2. Vorrichtung nach Anspruch 1, **dadurch gekennzeichnet, dass** die wenigstens eine Einrichtung (4) zur Erzeugung eines direkt auf die Bauebene (9) gerichteten Laserstrahls eingerichtet ist, wobei die wenigstens eine Einrichtung (4) wenigstens ein über der Bauebene (9), in welcher selektiv zu verfestigende oder verfestigte Baumaterialschichten ausbildbar sind, anordenbares oder angeordnetes Laserdiodenelement (10) umfasst, und/oder die wenigstens Einrichtung (4) wenigstens ein außerhalb einer Baukammer (8) der Vorrichtung (1) angeordnetes Laserdiodenelement (10) und wenigstens ein direkt über der Bauebene (9), in welcher selektiv zu verfestigende oder verfestigte Baumaterialschichten ausbildbar sind, anordenbares oder angeordnetes mit dem wenigstens einen außerhalb der Baukammer (8) der Vorrichtung (1) angeordneten Laserdiodenelement (10) optisch gekoppeltes optisches Element umfasst, welches zur Ablenkung eines von dem wenigstens einen Laserdiodenelement (10) erzeugten Laserstrahls (5) direkt auf die Bauebene (9) eingerichtet ist.

3. Vorrichtung nach Anspruch 2, **dadurch gekennzeichnet, dass** die wenigstens eine Einrichtung (4) eine Mehrzahl an Laserdiodenelementen (10) und/oder optischen Elementen umfasst, wobei die Laserdiodenelemente (10) und/oder die optischen Elemente wenigstens einen Teil der Bauebene (9), gegebenenfalls die vollständige Bauebene (9), flächenmäßig abdecken.

4. Vorrichtung nach einem der vorhergehenden Ansprüche, **dadurch gekennzeichnet, dass** das wenigstens eine Absaugelement (16) eine längliche, insbesondere rohrartige, gegebenenfalls trichterförmige, geometrische Gestalt aufweist, wobei die wenigstens eine Durchtrittsöffnung (18) sich quer zu dessen Längserstreckung durch das wenigstens eine Absaugelement (16) erstreckend ausgebildet ist.

5. Vorrichtung nach einem der vorhergehenden Ansprüche, **dadurch gekennzeichnet, dass** das wenigstens eine Absaugelement (16) eine längliche, insbesondere rohrartige, gegebenenfalls trichterförmige geometrische Gestalt aufweist, wobei es sich parallel zu der Bauebene (9) erstreckend oberhalb der Bauebene (9) angeordnet oder ausgebildet ist.

6. Vorrichtung nach einem der vorhergehenden Ansprüche, **dadurch gekennzeichnet, dass** die Absaugeinrichtung (12) mehrere längliche, insbesondere rohrartige, Absaugelemente (16) umfasst.

7. Vorrichtung nach Anspruch 6, **dadurch gekennzeichnet, dass** jedes Absaugelement (16) eine Durchtrittsöffnung aufweist, welche einem bestimmten von der wenigstens einen Einrichtung (4) erzeugten direkt auf die Bauebene (9) gerichteten Energiestrahl (5) zugeordnet ist.

8. Vorrichtung nach Anspruch 6 oder 7, **dadurch gekennzeichnet, dass** wenigstens ein erstes Absaugelement (16a) in einer ersten Ausrichtung relativ zu der Bauebene (9) angeordnet oder ausgebildet ist und wenigstens ein zweites Absaugelement (16b) parallel oder winklig, insbesondere lotrecht, relativ zu dem wenigstens einen ersten Absaugelement (16a) angeordnet oder ausgebildet ist.

9. Vorrichtung nach einem der Ansprüche 6 bis 8, **dadurch gekennzeichnet, dass** wenigstens zwei Absaugelemente (16, 16a, 16b) unmittelbar miteinander verbunden sind oder mittelbar über wenigstens ein diese verbindendes Verbindungselement (19) miteinander verbunden sind.

10. Vorrichtung nach einem der vorhergehenden Ansprüche, **dadurch gekennzeichnet, dass** das wenigstens eine Absaugelement (16) wenigstens einen von einer Saugströmung durchströmbaren Strömungsabschnitt (22) und wenigstens einen mit wenigstens einer entsprechenden Durchtrittsöffnung (18) versehenen Absaugabschnitt (23) aufweist, wobei der wenigstens eine Strömungsabschnitt (22) und der wenigstens eine Absaugabschnitt (23) miteinander kommunizieren, sodass über die Durchtrittsöffnung (18) abgesaugtes, sich prozessbedingt aus der Bauebene (9) gelöstes nicht verfestigtes Baumaterial (3) und/oder prozessbedingt entstehendes Prozessgas über den Verbindungsabschnitt (24) in den Strömungsabschnitt (22) gelangt.

11. Vorrichtung nach einem der vorhergehenden Ansprüche, **dadurch gekennzeichnet, dass** wenigstens ein Absaugelement (16) als eine wenigstens eine Durchtrittsöffnung (18) aufweisende, von einer Strömungskanalstruktur durchsetzte Absaugplatte ausgebildet ist, welche sich parallel zu der Bauebene (9) erstreckend oberhalb der Bauebene (9) angeordnet oder ausgebildet ist.

12. Vorrichtung nach Anspruch 11, **dadurch gekennzeichnet, dass** die Absaugplatte wenigstens einen Teil der Bauebene (9), insbesondere die gesamte Bauebene (9), flächenmäßig überdeckt.

13. Vorrichtung nach einem der vorhergehenden Ansprüche, **dadurch gekennzeichnet, dass** wenigstens zwei Absaugelemente (16), insbesondere versetzt zueinander, in mehreren Ebenen übereinander angeordnet sind.

14. Vorrichtung nach einem der vorhergehenden Ansprüche, **dadurch gekennzeichnet, dass** wenigstens ein Absaugelement (16) in wenigstens einem Bewegungsfreiheitsgrad bewegbar relativ zu der Bauebene (9) gelagert ist.

15. Vorrichtung nach einem der vorhergehenden Ansprüche, **dadurch gekennzeichnet, dass** jede absaugelementseitige Durchtrittsöffnung (18) einem von der Einrichtung (4) erzeugten direkt auf die Bauebene (9) gerichteten Energiestrahl (5) zuordenbar oder zugeordnet ist.

16. Absaugeinrichtung (12) für eine Vorrichtung (1) zur generativen Herstellung eines dreidimensionalen Objekts (2) durch sukzessive schichtweise selektive Verfestigung von Baumaterialschichten aus verfestigbarem Baumaterial (3) vermittels wenigstens eines Energiestrahls (5), insbesondere für eine Vorrichtung (1) nach einem der vorhergehenden Ansprüche, umfassend wenigstens eine Einrichtung (4) zur Erzeugung wenigstens eines Energiestrahls (5) zur schichtweisen selektiven Verfestigung einzelner Baumaterialschichten aus verfestigbarem Baumaterial (3), wobei die wenigstens eine Einrichtung (4) zur Erzeugung eines direkt auf eine Bauebene (9) gerichteten Energiestrahls (5) eingerichtet ist, wobei die Absaugeinrichtung (12) zur Absaugung von sich prozessbedingt aus einer Bauebene (9) gelöstem nicht verfestigten Baumaterial (3) und/oder prozessbedingt entstehenden Prozessgasen eingerichtet ist, **dadurch gekennzeichnet, dass**
die Absaugeinrichtung (12) wenigstens ein von einer Saugströmung durchströmbares Absaugelement (16) umfasst, wobei in dem wenigstens einen Absaugelement (16) wenigstens eine Durchtrittsöffnung (18) zum Durchtritt eines von einer vorrichtungsseitigen Einrichtung (4) erzeugten direkt auf die Bauebene (9) gerichteten Energiestrahls (5) ausgebildet ist.

17. Verfahren zur generativen Herstellung eines dreidimensionalen Objekts (2) durch sukzessive schichtweise selektive Verfestigung einzelner Baumaterialschichten (3) aus verfestigbarem Baumaterial (4) vermittels eines von einer Strahlungserzeugungseinrichtung (5) erzeugten Energiestrahls (6), **dadurch gekennzeichnet, dass** zur Absaugung von sich prozessbedingt aus einer Bauebene (9) gelöstem nicht verfestigten Baumaterial (3) und/oder prozessbedingt entstehenden Prozessgasen eine Absaugeinrichtung (12) nach Anspruch 16 verwendet wird.

## Claims

1. Apparatus (1) for generative manufacture of a three-dimensional object (2), by successive layer-wise selective hardening of construction material layers consisting of hardenable construction material (3), by means of at least one energy beam (5), comprising at least one device (4) for generating at least one energy beam (5) for layer-wise selective hardening of individual construction material layers consisting of hardenable construction material (3), wherein the at least one device (4) is designed for generating an energy beam (5) that is oriented directly onto a construction plane (9), **characterised by** a suction device (12) which is designed for suctioning non-hardened construction material (3) which is detached from the construction plane (9) on account of the process, and/or process gases resulting on account of the process, wherein the suction device (12) comprises at least one suction element (16) through which a suction flow can flow, wherein at least one through-opening (18) for passage of the energy beam (5) that is generated by the at least one device (4) and is oriented directly onto the construction plane (9) is formed in the at least one suction element (16).

2. Apparatus according to claim 1, **characterised in that** the at least one device (4) is designed for generating a laser beam oriented directly onto the construction plane (9), wherein the at least one device (4) comprises at least one laser diode element (10) which can be or is arranged over the construction plane (9) in which construction material layers, which are to be or are selectively hardened, can be formed, and/or
the at least one device (4) comprises at least one laser diode element (10) that is arranged outside a construction chamber (8) of the apparatus (1), and at least one optical element which can be or is arranged directly over the construction plane (9), in which construction material layers, which are to be or are selectively hardened, can be formed, and which is optically coupled to the at least one laser diode element (10) arranged outside the construction chamber (8) of the apparatus (1), which optical element is designed for deflecting a laser beam (5), generated by the at least one laser diode element (10), directly onto the construction plane (9).

3. Apparatus according to claim 2, **characterised in that** the at least one device (4) comprises a plurality of laser diode elements (10) and/or optical elements, wherein the laser diode elements (10) and/or the optical elements cover at least a portion of the construction plane (9), optionally the entire construction plane (9), over the surface thereof.

4. Apparatus according to any of the preceding claims, **characterised in that** the at least one suction element (16) has an elongate, in particular tubular, optionally funnel-shaped, geometric shape, wherein the at least one through-opening (18) is designed so as to extend transversely to the longitudinal extension thereof, through the at least one suction element (16).

5. Apparatus according to any of the preceding claims, **characterised in that** the at least one suction element (16) has an elongate, in particular tubular, optionally funnel-shaped, geometric shape, wherein it is arranged or formed so as to extend in parallel with the construction plane (9), above the construction plane (9).

6. Apparatus according to any of the preceding claims, **characterised in that** the suction device (12) comprises a plurality of elongate, in particular tubular, suction elements (16).

7. Apparatus according to claim 6, **characterised in that** each suction element (16) comprises a through-opening which is associated with a particular energy beam (5) generated by the at least one device (4) and oriented directly onto the construction plane (9).

8. Apparatus according to either claim 6 or claim 7, **characterised in that** at least one first suction element (16a) is arranged or formed in a first orientation relative to the construction plane (9), and at least one second suction element (16b) is arranged or formed in parallel or at an angle, in particular perpendicularly, relative to the at least one first suction element (16a).

9. Apparatus according to any of claims 6 to 8, **characterised in that** at least two suction elements (16, 16a, 16b) are directly interconnected or indirectly interconnected via at least one connection element (19) connecting them.

10. Apparatus according to any of the preceding claims, **characterised in that** the at least one suction element (16) comprises at least one flow portion (22) through which a suction flow can flow, and at least one suction portion (23) which is provided with at least one corresponding through-opening (18), wherein the at least one flow portion (22) and the at least one suction portion (23) communicate with one another, such that non-hardened construction material (3) which is detached from the construction plane (9) on account of the process, and/or process gas resulting on account of the process, arrives in the flow portion (22) via the connection portion (24).

11. Apparatus according to any of the preceding claims, **characterised in that** at least one suction element (16) is designed as a suction plate which comprises at least one through-opening (18) and which is penetrated by a flow channel structure, which suction plate is arranged or formed so as to extend in parallel with the construction plane (9), above the construction plane (9).

12. Apparatus according to claim 11, **characterised in that** the suction plate covers at least a portion of the construction plane (9), in particular the entire construction plane (9), over the surface area.

13. Apparatus according to any of the preceding claims, **characterised in that** at least two suction elements (16) are arranged one above the other in a plurality of planes, in particular offset relative to one another.

14. Apparatus according to any of the preceding claims, **characterised in that** at least one suction element (16) is mounted so as to be movable, in at least one degree of freedom of movement, relative to the construction plane (9).

15. Apparatus according to any of the preceding claims, **characterised in that** each through-opening (18) on the suction element side can be or is associated with an energy beam (5) that is generated by the device (4) and is oriented directly onto the construction plane (9).

16. Suction device (12) for an apparatus (1) for generative manufacture of a three-dimensional object (2), by successive layer-wise selective hardening of construction material layers consisting of hardenable construction material (3), by means of at least one energy beam (5), in particular for an apparatus (1) according to any of the preceding claims, comprising at least one device (4) for generating at least one energy beam (5) for layer-wise selective hardening of individual construction material layers consisting of hardenable construction material (3), wherein the at least one device (4) is designed for generating an energy beam (5) that is oriented directly onto a construction plane (9), wherein the suction device (12) is designed to suction non-hardened construction material (3) which is detached from the construction plane (9) on account of the process, and/or process gases resulting on account of the process, **characterised in that**
the suction device (12) comprises at least one suction element (16) through which a suction flow can flow, wherein at least one through-opening (18) for passage of an energy beam (5), generated by a device (4) on the apparatus side, oriented directly onto the construction plane (9) is formed in the at least one suction element (16).

17. Method for generative manufacture of a three-dimensional object (2), by successive layer-wise selective hardening of construction material layers consisting of hardenable construction material (4) by means of at least one energy beam (6) generated by a radiation emission device (5), **characterised in that,** in order to suction non-hardened construction material (3) which is detached from the construction plane (9) on account of the process, and/or process gases resulting on account of the process, a suction device (12) according to claim 16 is used.

## Revendications

1. Dispositif (1) pour la fabrication générative d'un objet tridimensionnel (2) par solidification sélective par couches successive de couches de matériau de construction composées d'un matériau de construction (3) pouvant être solidifié au moyen d'au moins un faisceau d'énergie (5), comprenant au moins un système (4) pour générer au moins un faisceau d'énergie (5) destiné à solidifier de manière sélective par couches diverses couches de matériau de construction composées d'un matériau de construction (3) pouvant être solidifié, dans lequel l'au moins un système (4) est mis au point pour générer un faisceau d'énergie (5) dirigé directement sur un plan de construction (9), **caractérisé par** un système d'aspiration (12), lequel est mis au point pour aspirer du matériau de construction (3) non solidifié détaché du plan de construction (9) en raison du processus et/ou des gaz de processus apparus en raison du processus, dans lequel le système d'aspiration (12) comprend au moins un élément d'aspiration (16) pouvant être traversé par un écoulement d'aspiration, dans lequel au moins une ouverture de passage (18) destinée à faire passer le faisceau d'énergie (5) dirigé directement sur le plan de construction (9), généré par l'au moins un système (4) est réalisée dans l'au moins un élément d'aspiration (16).

2. Dispositif selon la revendication 1, **caractérisé en ce que** l'au moins un système (4) est mis au point pour générer un faisceau laser dirigé directement sur le plan de construction (9), dans lequel l'au moins un système (4) comprend au moins un élément à diode laser (10) pouvant être disposé ou disposé au-dessus du plan de construction (9), dans lequel des couches de matériau de construction à solidifier ou solidifiées de manière sélective peuvent être réalisées, et/ou
l'au moins un système (4) comprend au moins un élément à diode laser (10) disposé à l'extérieur d'une chambre de construction (8) du dispositif (1) et au moins un élément optique pouvant être disposé ou disposé directement au-dessus du plan de construction (9), dans lequel des couches de matériau de construction à solidifier ou solidifiées de manière sélective peuvent être réalisées, couplé optiquement à l'au moins un élément à diode laser (10) disposé à l'extérieur de la chambre de construction (8) du dispositif (1), lequel est mis au point pour dévier directement sur le plan de construction (9) un faisceau laser (5) généré par l'au moins un élément à diode laser (10).

3. Dispositif selon la revendication 2, **caractérisé en ce que** l'au moins un système (4) comprend une multitude d'éléments à diode laser (10) et/ou d'éléments optiques, dans lequel les éléments à diode laser (10) et/ou les éléments optiques recouvrent en surface au moins une partie du plan de construction (9), éventuellement la totalité du plan de construction (9).

4. Dispositif selon l'une quelconque des revendications précédentes, **caractérisé en ce que** l'au moins un élément d'aspiration (16) présente une forme géométrique allongée, en particulier tubulaire, éventuellement en forme d'entonnoir, dans lequel l'au moins une ouverture de passage (18) est réalisée de manière à s'étendre à travers l'au moins un élément d'aspiration (16) de manière transversale par rapport à son extension longitudinale.

5. Dispositif selon l'une quelconque des revendications précédentes, **caractérisé en ce que** l'au moins un élément d'aspiration (16) présente une forme géométrique allongée, en particulier tubulaire, éventuellement en forme d'entonnoir, dans lequel il est disposé ou réalisé au-dessus du plan de construction (9) de manière à s'étendre parallèlement au plan de construction (9).

6. Dispositif selon l'une quelconque des revendications précédentes, **caractérisé en ce que** le système d'aspiration (12) comprend plusieurs éléments d'aspiration (16) allongés, en particulier tubulaires.

7. Dispositif selon la revendication 6, **caractérisé en ce que** chaque élément d'aspiration (16) présente une ouverture de passage, laquelle est associée à un faisceau d'énergie (5) donné généré par l'au moins un système (4), dirigé directement sur le plan de construction (9).

8. Dispositif selon la revendication 6 ou 7, **caractérisé en ce qu'**au moins un premier élément d'aspiration (16a) est disposé ou réalisé dans une première orientation par rapport au plan de construction (9) et au moins un deuxième élément d'aspiration (16b) est disposé ou réalisé de manière parallèle ou selon un angle, en particulier de manière perpendiculaire, par rapport à l'au moins un premier élément d'aspiration (16a).

9. Dispositif selon l'une quelconque des revendications 6 à 8, **caractérisé en ce qu'**au moins deux éléments d'aspiration (16, 16a, 16b) sont reliés l'un à l'autre directement ou sont reliés l'un à l'autre indirectement par l'intermédiaire d'au moins un élément de liaison (19) reliant ceux-ci.

10. Dispositif selon l'une quelconque des revendications précédentes, **caractérisé en ce que** l'au moins un élément d'aspiration (16) présente au moins une section d'écoulement (22) pouvant être traversée par un écoulement d'aspiration et au moins une section d'aspiration (23) pourvue d'au moins une ouverture de passage (18) correspondante, dans lequel l'au moins une section d'écoulement (22) et l'au moins une section d'aspiration (23) communiquent l'une avec l'autre si bien que du matériau de construction (3) non solidifié détaché du plan de construction (9) en raison du processus, aspiré par l'intermédiaire de l'ouverture de passage (18) et/ou des gaz de processus apparaissant en raison du processus parviennent dans la section d'écoulement (22) par l'intermédiaire de la section de liaison (24).

11. Dispositif selon l'une quelconque des revendications précédentes, **caractérisé en ce qu'**au moins un élément d'aspiration (16) est réalisé en tant qu'une plaque d'aspiration présentant au moins une ouverture de passage (18), traversée par une structure de canal d'écoulement, laquelle est disposée ou réalisée au-dessus du plan de construction (9) de manière à s'étendre de manière parallèle par rapport au plan de construction (9).

12. Dispositif selon la revendication 11, **caractérisé en ce que** la plaque d'aspiration recouvre en surface au moins une partie du plan de construction (9), en particulier la totalité du plan de construction (9).

13. Dispositif selon l'une quelconque des revendications précédentes, **caractérisé en ce qu'**au moins deux éléments d'aspiration (16) sont disposés l'un au-dessus de l'autre dans plusieurs plans, en particulier de manière décalée l'un par rapport à l'autre.

14. Dispositif selon l'une quelconque des revendications précédentes, **caractérisé en ce qu'**au moins un élément d'aspiration (16) est monté par rapport au plan de construction (9) de manière à pouvoir être déplacé selon au moins un degré de liberté de mouvement.

15. Dispositif selon l'une quelconque des revendications précédentes, **caractérisé en ce que** chaque ouverture de passage (18) du côté de l'élément d'aspiration peut être associée ou est associée à un faisceau d'énergie (5) généré par le système (4), dirigé directement sur le plan de construction (9).

16. Système d'aspiration (12) pour un dispositif (1) pour la fabrication générative d'un objet tridimensionnel (2) par solidification sélective par couches successive de couches de matériau de construction composées d'un matériau de construction (3) pouvant être solidifié au moyen d'au moins un faisceau d'énergie (5), en particulier pour un dispositif (1) selon l'une quelconque des revendications précédentes, comprenant au moins un système (4) destiné à générer au moins un faisceau d'énergie (5) pour solidifier de manière sélective par couches diverses couches de matériau de construction composées d'un matériau de construction (3) pouvant être solidifié, dans lequel l'au moins un système (4) est mis au point pour générer un faisceau d'énergie (5) dirigé directement sur un plan de construction (9), dans lequel le système d'aspiration (12) est mis au point pour aspirer du matériau de construction (3) non solidifié détaché d'un plan de construction (9) en raison du processus et/ou des gaz de processus apparaissant en raison du processus, **caractérisé en ce que** le système d'aspiration (12) comprend au moins un élément d'aspiration (16) pouvant être traversé par un écoulement d'aspiration, dans lequel au moins une ouverture de passage (18) destinée à faire passer un faisceau d'énergie (5) généré par un système (4) du côté du dispositif, dirigé directement sur le plan de construction (9) est réalisée dans l'au moins un élément d'aspiration (16).

17. Procédé pour la fabrication générative d'un objet tridimensionnel (2) par solidification sélective par couches successive de diverses couches de matériau de construction (3) composées d'un matériau de construction (4) pouvant être solidifié au moyen d'un faisceau d'énergie (6) généré par un système de génération de rayonnement (5), **caractérisé en ce qu'**un système d'aspiration (12) selon la revendication 16 est utilisé pour aspirer du matériau de construction (3) non solidifié détaché d'un plan de construction (9) en raison du processus et/ou des gaz de processus apparus en raison du processus.
